# EUROPEAN PATENT APPLICATION

(11) **EP 1 674 883 A2**
(43) Date of publication of application: **28.06.2006**
(21) Application number: 05028523.8
(22) Date of filing: 27.12.2005
(51) Int. Cl.: G01S 13/86, G01S 17/02, G06K 9/68, G06K 9/66

(54) **Apparatus and method for detecting vehicle**

(30) Priority: 27.12.2004 JP 2004375417
(71) Applicant: HITACHI, LTD., Chiyoda-ku Tokyo 100-8280 (JP)
(72) Inventor: Otsuka, Yuji, c/o Hitachi, Ltd., Tokyo 100-8220 (JP); Muramatsu, Shoji, c/o Hitachi, Ltd., Tokyo 100-8220 (JP); Takenaga, Hiroshi, c/o Hitachi, Ltd., Tokyo 100-8220 (JP); Monji, Tatsuhiko, c/o Hitachi, Ltd., Tokyo 100-8220 (JP)
(74) Representative: Beetz & Partner

(57) **Abstract**

The invention relates to a vehicle detection apparatus (100) having a classifier (122) that receives features of an image and judges whether the image is a vehicle. The features extracted from the picked-up image are supplied to the classifier so that judgment can be made of whether the image is the vehicle. If the judgment result and the result from a radar (130) are not matched, the picked-up image pattern is registered in teaching data (121). The classifier is updated by learning from the teaching data.

## Description

### BACKGROUND OF THE INVENTION

The present invention relates to a technique for detecting vehicles.

There is a technique to detect a preceding vehicle on the same lane and keep the distance to that vehicle (headway distance) constant (ACC: adaptive cruise control system).

In order to detect a preceding vehicle, it can be considered to use radar or images taken by a camera. Radar can detect the headway distance with high precision, but cannot detect the lateral distance with high precision. That is, when radar detects a preceding vehicle, it sometimes cannot distinguish whether the detected vehicle is running on the same lane or on another neighboring lane. On the other hand, since the camera has wide angle of view, it can crosswise detect the preceding vehicle with accuracy and thus the lateral position of the vehicle can be precisely measured by analyzing the camera image. Thus, the preceding vehicle on the same lane can be detected more accurately even on a curve in the road or when a cut-in vehicle is approached.

A technical paper, IEEE Transactions on "Pattern Analysis and Machine Intelligence" Vol. 26, No. 8, 2004, pp. 1064-1072 describes a vehicle detection apparatus for detecting the preceding vehicle by using the camera image. In this vehicle detection apparatus, the features extracted from the camera image are supplied to a classifier that is formed of a support vector machine based on the pattern recognition technology such as neural network, so that the image can be identified as a vehicle or not. The classifier may be software previously stored in a memory.

### SUMMARY OF THE INVENTION

In the quoted paper, it is disclosed that the classifier is constructed to identify the patterns of vehicles that already existed before this classifier is produced. Therefore, this technique sometimes cannot detect as vehicles the new-model cars come on to the market after the production of the classifier.

It is an objective of the invention to provide a technique capable of detecting even the new-model cars as vehicles.

In order to solve the above problem, the vehicle detection apparatus of the invention is constructed to update the classifier by using the camera image.

For example, the vehicle detection apparatus has:
a classifier that receives features and judges whether the features are a vehicle;
image pick-up means for picking up an image;
vehicle judgment means that supplies to the classifier the features extracted from the image picked up by the image pick-up means so that judgment can be made of whether the image contains the vehicle;
other image detection means that is provided separately from the vehicle judgment means and that detects the vehicle;
coincidence judgment means for judging whether the judgment result of the vehicle judgment means coincides with the detection result of the other image detection means; and/or
means that updates the classifier so that, when the coincidence judgment means judges to be mismatched, the judgment result of the vehicle judgment means can be matched to the result of the other image detection means after supplying to the classifier the features extracted from the image picked up by the image pick-up means.

The vehicle detection apparatus may have means for delivering up the image picked up by the image pick-up means to a center apparatus as teaching data when the coincidence judgment means judges to be mismatched. The center apparatus may have means for updating the classifier by using the teaching data received from the vehicle detection apparatus. The vehicle detection apparatus further has means for receiving the classifier updated by the center apparatus, and/or means for causing the received classifier to be stored in the memory mentioned above.

In addition, the other image detection means may be a radar for detecting the vehicle.

Other objects, features and advantages of the invention will become apparent from the following description of the embodiments of the invention taken in conjunction with the accompanying drawings.

### BRIEF DESCRIPTION OF THE DRAWINGS

FIG. 1 is a block diagram of an ACC system associated with one embodiment of the invention.
FIG. 2 is a flowchart of the processes in a vehicle detection unit 100.
FIGS. 3A through 3F are diagrams useful for explaining a method for specifying a vehicle candidate region.
FIG. 4 is a diagram to which reference is made in explaining a method for judgment of vehicle using an classifier.

### DESCRIPTION OF THE EMBODIMENTS

One embodiment of the invention will be described with reference to the accompanying drawings.

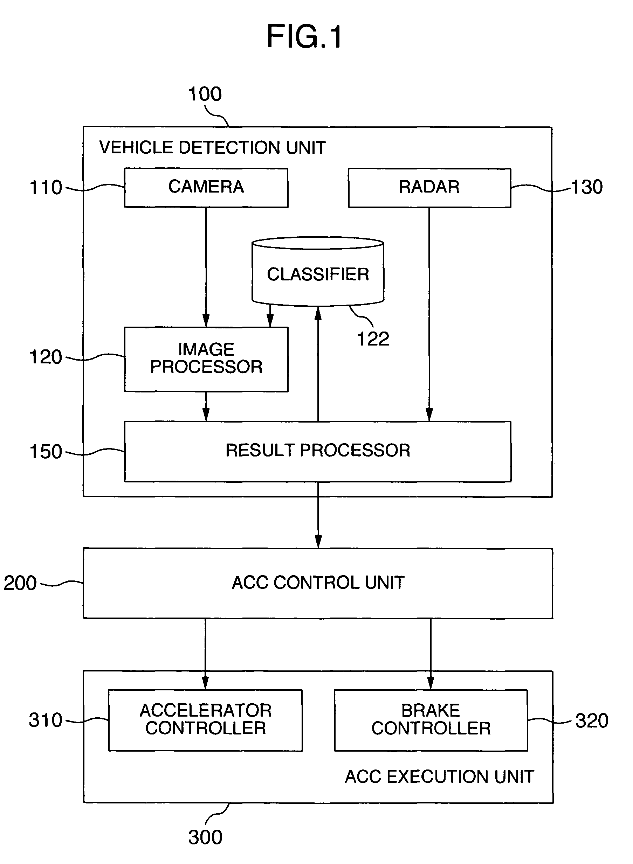

FIG. 1 is a block diagram of an ACC (Adaptive Cruise Control) system of this embodiment.

The vehicle having the ACC system mounted thereon is hereinafter called the "controlled vehicle". In addition, the vehicle that is ahead of the controlled vehicle and to be detected is called the "preceding vehicle".

The ACC system is composed of a vehicle detection unit 100, an ACC control unit 200 and an ACC execution unit 300.

The vehicle detection unit 100 has a camera 110, an image processor 120, a classifier 122, a radar 130, a radar data processor 140 and a result processor 150.

The camera 110 may be a CCD camera, and mounted on the controlled vehicle at a position where it can picturize the forward scene ahead of the controlled vehicle. The camera 110 sends the photographed image data to the image processor 120.

The image processor 120 receives the image data from the camera 110, and specifies a vehicle candidate region from the image data. Then, it judges whether the specified vehicle candidate region contains a preceding vehicle. This judgment is performed by using the classifier 122 stored in a memory (not shown) as will be described later. The image processor 120 sends the judgment result to the result processor 150.

The radar 130 detects the preceding vehicle (object) by the known method. When the radar 130 detects the vehicle, it transmits the detection result to the result processor 150. The radar 130 may be a millimeter wave radar or laser radar. If the radar 130 is, for example, a millimeter wave radar, it irradiates a millimeter wave forward, analyzes the wave reflected back from the preceding vehicle, and detects the existence, position (the distance from the controlled vehicle to the preceding vehicle, and the direction of the preceding vehicle as viewed from the controlled vehicle), and velocity (the relative velocity to the controlled vehicle) of the preceding vehicle. When the radar 130 is a millimeter wave radar, it can detect almost all the solid objects, but receives much noise. Thus, it is necessary to identify the detected object as a vehicle or not. If the radar 130 is a laser radar, it picks up less noise, but could detect side back reflectors. Therefore, it is necessary to discriminate the vehicle from those reflectors. The distinction between the vehicle and the other objects can be made by the known method.

The result processor 150 receives the judgment result from the image processor 120 and the vehicle detection result from the radar 130 and produces the final vehicle detection result. If the judgment result received from the image processor 120 does not coincide with the vehicle detection result received from the radar 130, the image taken by the camera 110 is registered as teaching data from which the classifier 122 is forced to learn.

The ACC control unit 200 responds to the information of existence, position, velocity and so on of the preceding vehicle supplied from the result processor 150 to generate commands for the accelerator and brake, and sends them to the ACC execution unit 300. If the distance between the controlled vehicle and the preceding vehicle is a predetermined value (for example, 30 m) or above, the ACC control unit 200 generates a command to increase the opening of accelerator (throttle valve), and supplies it to the ACC execution unit 300. On the contrary, if the distance between the controlled vehicle and the preceding vehicle is a predetermine value (for example, 25 m) or below, it generates a command to decrease the opening of accelerator, and a command to apply the brake, and supplies them to the ACC execution unit 300.

The ACC execution unit 300 has an accelerator controller 310 and a brake controller 320. The accelerator controller 310 closes or opens the accelerator (throttle valve) of the vehicle according to the command from the ACC control unit 200. The brake controller 320 activates the brakes of the vehicle on and off according to the command from the ACC control unit 200.

The image processor 120, classifier 122, result processor 150 and Acc control unit 200 can be achieved by a computer that has an arithmetic unit such as CPU, and a storage unit such as memory and HDD. The process in each of the above functional elements is achieved when the CPU executes the program loaded in the memory. The structure (hierarchical structure, connection of nodes and weight coefficients) of classifier 122 is stored in the memory or HDD. The radar 130 has its own MPU and memory to perform the above processes.

The ACC system constructed as above is operated as follows.

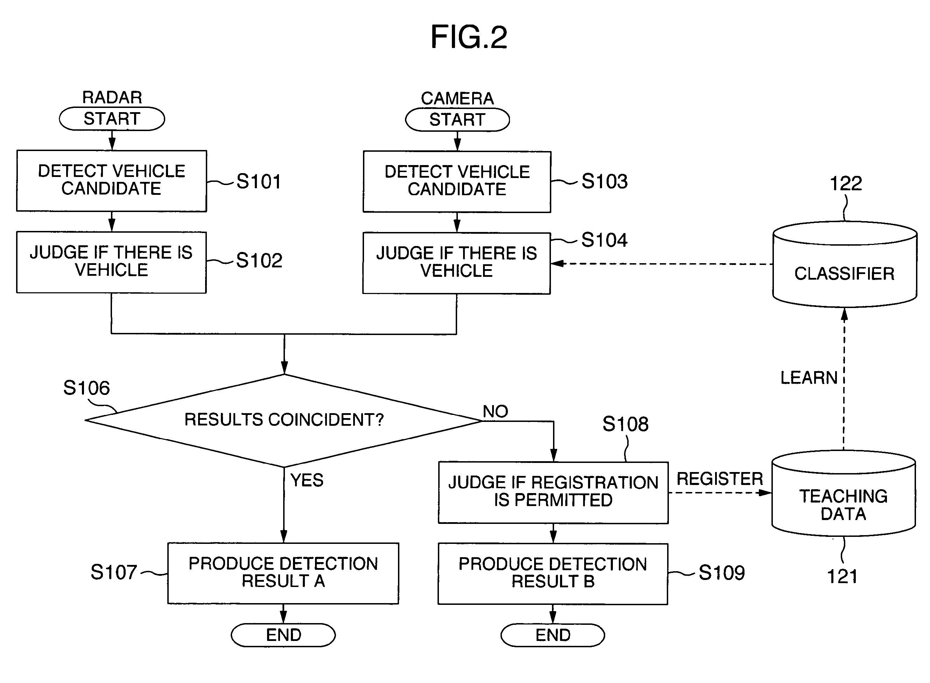

FIG. 2 is a flowchart of the processes for detection of vehicle that are performed by the vehicle detection unit 100 of the ACC system.

The radar 130 detects a vehicle candidate (S101). The radar 130 judges whether the detected vehicle candidate is a vehicle. If it is a vehicle, the radar 130 sends the detected result (the existence, position (distance and direction) and velocity of the vehicle) to the result processor 150 (S102).

On the other hand, the camera 110 intermittently transmits the picked-up image data to the image processor 120.

The image processor 120 specifies a region in which a vehicle candidate is contained (vehicle candidate region) from the image data received from the camera 110 (S103). The technique for specifying the vehicle candidate region may be either one of a way to detect the vertical edges of the vehicle and another way to detect the horizontal edges of the vehicle.

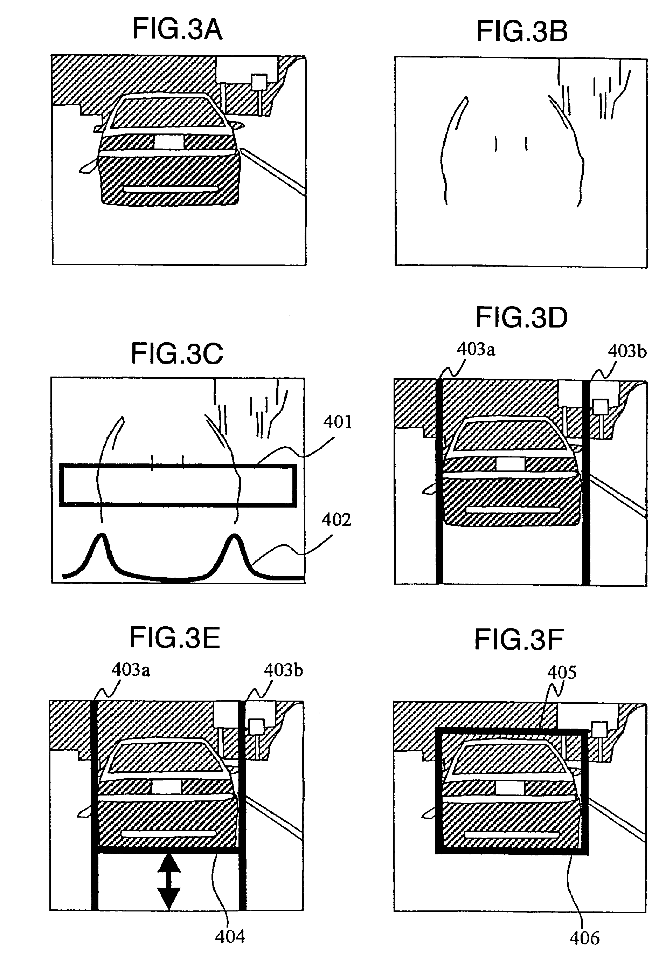

FIGS. 3A through 3F are diagrams useful for explaining the method for specifying the vehicle candidate region. FIG. 3A shows image data containing an image of the back of the preceding vehicle that is taken by the camera 110. The vehicle appearing within the image data is substantially a rectangular shape with its left and right sides taken as both lateral ends of the vehicle, its top side as the roof and its bottom side as the shadow or bumper line.

Thus, the image processor 120 detects the vertical edges of the vehicle as the vertical lines of the rectangular shape. Specifically, the image processor 120 detects only the vertical edges from the dark and light image as shown in FIG. 3B. Then, in order to observe the distribution of vertical edges, it defines a window region 401 indicating the possible existence of the vehicle, projects the edges to the X-axis, and produces a histogram 402 as shown in FIG. 3C. Since the vehicle should have vertical edges closely formed at both lateral ends, the image processor 120 specifies the peaks of the histogram 402 as vehicle's ends 403a, 403b as shown in FIG. 3D.

Then, the image processor 120 searches the area confined between the vertical edges 403a and 403b from the bottom side of the image to find out a continuous horizontal edge as a bottom end 404 of the vehicle as shown in FIG. 3E. In addition, since the ratio of the width and height of the vehicle is steady in some extent, a certain distance (for example, 0.8 time the distance between the top and bottom ends) is measured from the bottom end 404 of the vehicle and employed as a top end 405. Thus, the vehicle candidate region 406 can be determined as shown in FIG. 3F.

After determining the ends of the vehicle as above, the image processor 120 estimates the distance and direction of the preceding vehicle relative to the controlled vehicle. The direction can be obtained from the lateral position of the vehicle image. The distance can be measured by using the principle that the vehicle image looks the smaller or larger as the preceding vehicle is far from or close to the controlled vehicle, respectively.

Thereafter, the image processor 120 judges whether the image of the vehicle candidate region specified in step S103 is a preceding vehicle (S104). The vehicle candidate region is specified by detecting the vertical edges as above. In practice, the image data sometimes contains power poles and supporting rods for traffic signals, guardrails and so on. These poles and rods could be detected as vertical edges. Therefore, it is necessary to judge whether the image (pattern) of the vehicle candidate region is the preceding vehicle.

For making this judgment, it can be considered to use the template matching in which a plurality of templates are prepared as typical vehicle patterns and coincidence is estimated by DAD (Sum of Absolute Differences) or normalized correlation operation or to use the pattern recognition using the classifier that is typical in the neural network. In either case, database is necessary as a source of index for determining whether the image is a preceding vehicle. Various different vehicle patterns are stored as database, and typical templates or classifier is produced from the database. In the real world, a large variety of passenger cars, light cars, trucks and special vehicles exist, and the environmental light includes various different colors and reflects differently. Therefore, in order to reduce the errors in this judgment, it is necessary to prepare a large amount of database. At this time, the former template matching is unrealistic because the number of templates becomes huge when the judgment is tried to make without omission. Thus, in this embodiment, the latter classifier is used to judge. The size of the classifier does not depend on the size of the database as a source. The database for generating the classifier is called the teaching data.

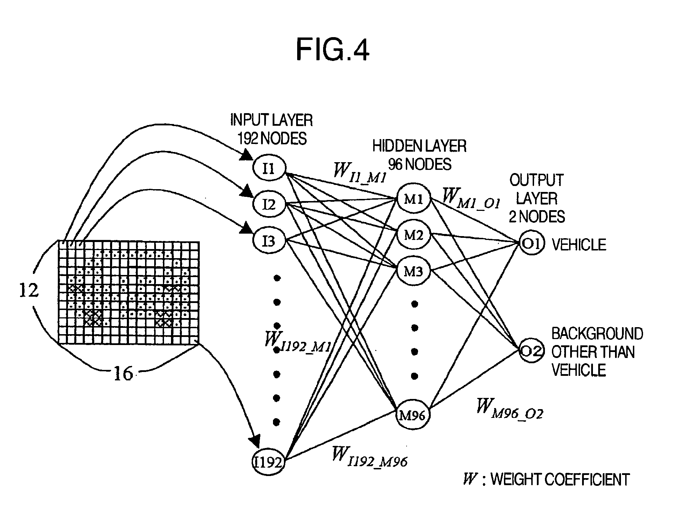

FIG. 4 is a diagram useful for explaining a method for judging whether the image is a vehicle by using the classifier 122.

The image processor 120 extracts the features from the image of the vehicle candidate region obtained in step S103. Specifically, the image of the vehicle candidate region is converted to an image of 12 vertical dots and 16 horizontal dots. The brightness of each dot of the converted image is taken as a feature.

The image processor 120 supplies the features (the brightness of dots) to the nodes of an input layer of the classifier in the order of dots from the upper left one of the image.

The classifier 122 is a neural network having a hierarchical structure composed of the input layer of 192 nodes, a hidden layer of 96 nodes and an output layer of 2 nodes. In addition, weight coefficients are respectively allotted to the connections of the nodes between the layers. In the classifier 122, the features fed to the nodes of the input layer are respectively multiplied by the corresponding allotted weight coefficients, and then supplied to the nodes of the hidden layer. The values fed to each node of the hidden layer are all added, multiplied by the corresponding allotted weight coefficient, and supplied to the corresponding node of the output layer. In addition, the values fed to each node of the output layer are summed, and finally produced as the value of each of the nodes 01 and 02 of the output layer.

The allotment of weight coefficients is determined so that, if the image of the vehicle candidate region is a vehicle, the condition of (value of node 01) > (value of node 02) can be satisfied and that, if this image is not vehicle, the condition of (value of node 01) ≦ (value of node 02) can be satisfied.

In the image processor 120, if the condition of (value of node 01) > (value of node 02) is met, the image of the vehicle candidate region is judged a preceding vehicle. In addition, if the condition of (value of 01) ≦ (value of node 02) is satisfied, the image is judged not a preceding vehicle. The judgment result is sent to the result processor 150. At this time, when the image is judged a vehicle, the distance and direction of the preceding vehicle are also supplied to the result processor 150.

Then, the result processor 150 checks if the detection result from the radar 130 matches the judgment result from the image processor 120 (S106).

In this case, the result processor 150 tests for the matching between the results of having detected the same object. Specifically, the result processor 150 checks if the position (distance and direction) of the object contained in the result from radar 130 coincides (or coincides within a certain range) with the position (distance and direction) of the vehicle candidate region contained in the result from the image processor 120.

If the same vehicle is detected from the results from the radar 130 and image processor 120, the result processor 150 judges both results to be equal. In addition, if neither the radar 130 nor the processor 120 detects any vehicle, the result processor 150 judges both results to be equal.

On the other hand, if the radar 130 does not detect any vehicle but the processor 120 detects a vehicle, then the result processor 150 judges both results not to be equal. Moreover, if the radar 130 detects a vehicle but the processor 120 does not detect any vehicle, then the result processor 150 judges both results not to be equal.

If the results are judged equal (YES in step S106), the result processor 150 supplies the judgment result to the ACC control unit 200. The judgment result includes the information of having normally detected or, if detected, detailed information (distance, direction and so on) of the vehicle.

If the results are judged not equal (NO in step S106), the result processor 150 decides if the image of the vehicle candidate region specified in step S103 should be registered in the teaching data from which the classifier 122 learns. If it decides to register, it registers the image of the candidate region in the teaching data 121 of the memory (S108). Specifically, the following processes are performed.
(1) When the radar 130 detects a vehicle whereas the processor 120 does not recognize that vehicle, the result processor 150 registers the image of the vehicle candidate region in the teaching data 121 as a vehicle image.
(2) On the contrary, if the radar 130 does not any vehicle whereas the processor 120 recognize a vehicle, the result processor 150 registers the image of the vehicle candidate region in the teaching data 121 as a not-vehicle image.

When the image is registered in the teaching data, the features extracted from the image of candidate region may be registered.

Then, in step S109, the result processor 150 transmits the detection result of the radar 130 and the judgment result of the image processor 120 to the ACC control unit 200 together with the information of having judged not equal. The ACC control unit 200 is previously set so that either one of the results can be selected when the inconsistency information is received. Thus, the ACC control unit 200 selects either one of the received detection result and judgment result according to the established setting content. In addition, it generates a command to the ACC execution unit 300 according to the selected information.

While the processes in the case of having detected a vehicle or vehicle candidate have been explained, the image processor 120 further periodically forces the classifier 122 to learn from the teaching data 121, thereby updating it.

In other words, if the image contains a vehicle, the teaching data orders the classifier to reallocate weight coefficients so that the condition of (value of node 01) > (value of node 02) can be satisfied after the features extracted from this image are supplied to the input layer. On the other hand, if the image is not a vehicle, the teaching data orders the classifier to reallocate weight coefficients so that the condition of (value of node 01 ≦ (value of node 02) can be met after the features extracted from the image are supplied to the input layer. The system in which the classifier of the neural network structure learns from the teaching data can be realized by a known approach such as the method of inverse propagation of errors.

One embodiment of the invention has been described as above.

According to the above embodiment, the vehicle detection results from the radar and camera are consolidated (sensor fusion) to produce the final vehicle detection result. Therefore, the vehicle detection result can be obtained with higher reliability. In other words, the radar can detect the distance to the preceding vehicle with high precision, but it is poor in its crosswise detection precision. That is, the detected vehicle occasionally cannot be identified to be the vehicle running on the same lane as the controlled vehicle or running on another adjacent lane. On the other hand, according to the vehicle detection by the camera, the width of the vehicle can be precisely detected by analyzing the camera image. Thus, the preceding vehicle on the same lane can be more precisely detected even when we go around a curve or encounter a cut-in vehicle. Therefore, by combining the detection results from the radar and camera, it is possible to improve the precision of data of vehicle detection result.

In addition, the classifier 122 is updated as needed. Therefore, even a new-model car appears, it can be judged a vehicle.

The above embodiment can be variously modified within the scope of the invention.

For example, information from a radar could contain misrecognition, and thus erroneous information might be registered in the teaching data 121. In that case, the recognition reliability might be reduced the more. In order to avoid this, the image of candidate region is not automatically registered in the teaching data 121, but the user (driver) may be allowed to check if the image should be registered in the teaching data 121, so that the image can be registered when the user enters the request for registration through the input unit. For example, when the apparatus detects the stop of a car, a dialog box for accepting the judgment of vehicle or not is displayed on the display device connected to the vehicle detection unit 100. If the judgment to be a vehicle is received, the image of the vehicle candidate region is registered in the teaching data 121 as an image of vehicle. If the judgment not to be a vehicle is received, the image of the vehicle candidate region is registered not to be any vehicle. Thus, erroneous information can be prevented from being registered in the teaching data 121, and hence the classifier 122 can be prevented from learning from the erroneous teaching data 121.

In addition, since the amount of learning process is large and thus takes a long time to do the process, the image processor 120 may be allowed to make the learning during the time in which it does not perform the vehicle detection process, for example, when the controlled vehicle stops or runs at a low speed. The stop or low-speed running can be judged from the output of the speed sensor.

In addition, since the teaching data 121 might contain erroneous information, the teaching data 121 should be once delivered up through a network or recording medium to the center apparatus installed at the car dealer or the like. The center apparatus tests for the teacher data 121, and the classifier is forced to learn from the teaching data 121 after the test. The vehicle detection unit 100 receives the classifier that the center apparatus produces and supplies through a network or recording medium. In this case, the center apparatus may produce the classifier by using the teaching data obtained from a plurality of vehicle detection units 100. By doing this, it is possible to efficiently improve the performance of the classifier. When the center apparatus tests on the teaching data 121, the operator judges if the image contained in the teaching data is a vehicle by referring to the display screen on which the images contained in the teaching data are displayed one after another. When the image judged not vehicle, it is deleted from the teaching data.

While the vehicle detection result from radar 130 is compared to the judgment result from image processor 120 in step S106 of this embodiment, the invention is not limited to this comparison. The output from another method capable of detecting the preceding vehicle may be compared to the judgment result from image processor 120.

In addition, the classifier 122 is not limited to the neural network. It may be replaced by a support vector machine classifier, NN (Nearest Neighbor) classifier or Bayesiam classifier.

Moreover, the vehicle detection unit 100 may be provided to be integral with the navigational device and to share the CPU and memory with the navigation device.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A vehicle detection apparatus (100) comprising:
a classifier (122) that receives features of an image and judges whether said image is a vehicle;
image pick-up means (110) for picking up said image;
vehicle judgment means (120) that supplies to said classifier said features extracted from said image taken by said image pick-up means so that judgment can be made of whether said image contains a vehicle;
other image detection means (130) that is provided separately from said vehicle judgment means and that detects said vehicle;
coincidence judgment means (150) for judging whether the judgment result of said vehicle judgment means coincides with the detection result of said other image detection means; and
means (121) that updates said classifier so that, when said coincidence judgment means judges to be mismatched, the judgment result of said vehicle judgment means can be matched to the result from said other image detection means after supplying to said classifier said features extracted from the image taken by said image pick-up means.

2. A vehicle detection apparatus comprising:
a classifier (122) that receives features of an image and judges whether said image is a vehicle;
a radar (130) for detecting said vehicle;
image pick-up means (110) for picking up said image;
vehicle judgment means (120) that supplies to said classifier said features extracted from said image picked up by said image pick-up means so that judgment can be made of whether said image contains said vehicle;
coincident judgment means (150) for judging whether the judgment result of said vehicle judgment means coincides with the detection result of said radar; and
means (121) that updates said classifier so that, when said coincidence judgment means judges to be mismatched, the judgment result of said vehicle judgment means can be matched to the result from said radar after supplying to said classifier said features extracted from the image taken by said image pick-up means.

3. A vehicle detection apparatus comprising:
a classifier (122) that receives features of an image and judges whether said image is a vehicle;
image pick-up means (110) for picking up said image;
judgment means (120) that supplies to said classifier said features extracted from said image picked up by said image pick-up means so that judgment can be made of whether said image contains said vehicle;
correctness/error judgment means (150) that judges whether the judgment result from said judgment means is correct;
means (121) that updates said classifier so that, when said correctness/error judgment means judges said judgment result to be error, the judgment result can be judged to be correct after supplying to said classifier said features extracted from said image picked up by said image pick-up means.

4. A system having a vehicle detection apparatus (100) and a center apparatus, said vehicle detection apparatus comprising:
a classifier (122) that receives features of an image and judges whether said image is a vehicle;
image pick-up means. (110) for picking up said image;
vehicle judgment means (120) that supplies to said classifier said features extracted from said image picked up by said image pick-up means so that judgment can be made of whether said image contains said vehicle;
other image detection means (130) that is provided separately from said vehicle judgment means and that detects said vehicle;
coincidence judgment means (150) for judging whether the judgment result of said vehicle judgment means coincides with the detection result of said other image detection means; and
means that delivers up said image picked up by said image pick-up means to said center apparatus as teaching data (121) when said coincidence judgment means judges said judgment result to be mismatched, said center apparatus comprising:
means that updates said classifier by using said teaching data received from said vehicle detection apparatus, said vehicle detection apparatus further comprising:
means for receiving said classifier updated by said center apparatus; and
means for storing said received classifier in a memory.

5. A vehicle detection apparatus comprising:
a classifier (122) that receives features of an image and judges whether said image is a vehicle;
image pick-up means (110) for picking up said image;
vehicle judgment means (120) that supplies to said classifier said features extracted from said image picked up by said image pick-up means so that judgment can be made of whether said image contains said vehicle;
other image detection means (130) that is provided separately from said vehicle judgment means and that detects said vehicle;
coincidence judgment means (150) for judging whether the judgment result of said vehicle judgment means coincides with the detection result of said other image detection means; and
means that registers said image picked up by said image pick-up means as teaching data from which said classifier is forced to learn when said coincidence judgment means judges said judgment result to be mismatched.

6. A method of detecting a vehicle in a vehicle detection apparatus (100), said vehicle detection apparatus having a classifier (122) that receives features and judges whether said features indicate a vehicle, said method comprising the steps of:
(S103) picking up an image;
(S104) supplying to said classifier said features extracted from said image picked up by said image picking-up step so that judgment can be made of whether said image contains a vehicle;
(S101, S102) detecting said vehicle as other step than said vehicle judgment step;
(S106) judging whether the judgment result of said vehicle judgment step coincides with the detection result of said other detection step; and
(S108) updating said classifier so that, when said coincidence judgment step judges to be mismatched, the judgment result of said vehicle judgment step can be matched to the result obtained by said other detection step after supplying to said classifier said features extracted from said image picked up by said image picking-up step.
